# EUROPÄISCHE PATENTANMELDUNG

(11) **EP 1 145 640 A1**
(43) Veröffentlichungstag der Anmeldung: **17.10.2001**
(21) Anmeldenummer: 01104327.0
(22) Anmeldetag: 23.02.2001
(51) Int. Cl.: A23B 7/148

(54) **Gas-Behandlungssatz und seine Verwendung zum Behandeln von Lebensmitteln und/oder Pflanzen**

(30) Priorität: 10.04.2000 DE 20006614 U; 23.09.2000 DE 10047259
(71) Anmelder: Haaf, Frieder, 76593 Gernsbach (DE)
(72) Erfinder: Haaf, Frieder, 76593 Gernsbach (DE)
(74) Vertreter: Hellmayr, Wolfgang, Dr. rer. nat.

(57) **Zusammenfassung**

Gegenstand der Erfindung ist ein Gas-Behandlungssatz zum Behandeln von Lebensmitteln, Schnittblumen und/oder Pflanzen. Er umfasst einen gasdicht abschließbaren Rezipienten und eine Gasquelle, wobei der Rezipient mindestens eine Gaseinlaßvorrichtung, die vorzugsweise als Einwegventil ausgebildet ist, und mindestens ein Gasauslaßventil aufweist.

Ein weiterer Gegenstand der Erfindung ist die Verwendung dieses Gas-Behandlungssatzes zum Frischhalten von Lebensmitteln und/oder Blumen mittels konservierender Gase oder Gasgemische, insbesondere mittels Kohlendioxid (CO₂).

## Beschreibung

Die Erfindung betrifft einen Gas-Behandlungssatz zum Behandeln von Lebensmitteln und/oder Pflanzen, insbesondere einen Gas-Behandlungssatz zum Frischhalten von Lebensmitteln und/oder Pflanzen, insbesondere von Pflanzenteilen, beispielsweise von Schnittblumen, mittels konservierender Gase oder Gasgemische, insbesondere mittels Kohlendioxid ( CO₂).

Es ist bekannt, die Haltbarkeit von Obst und Gemüsen durch Lagerung in kohlendioxidhaltiger Gasatmosphäre unter kontrollierten Bedingungen ("CA" = controlled atmosphere) zu verbessern. Der Transport von beispielsweise exotischen Früchten in die in gemäßigten Zonen liegenden Verbraucherländer erfolgt heute vor allem in Kühlschiffen mit CA-Kühlräumen, in denen bestimmte stickstoff- und kohlendioxidreiche, aber sauerstoffarme Atmosphären aufrecht erhalten werden.

Andererseits war bekannt, daß hohe CO₂ - Konzentrationen in der Atmosphäre die Stoffwechselaktivität von beispielsweise Beeren deutlich hemmen und die Qualität von Früchten auf diese Weise besser konservieren, als die Kühllagerung allein es emöglichen kann.

Der Transport und die Lagerung von Früchten, wie tropischen Früchten oder Zitrusfrüchten, Gemüsen und anderen überwiegend vegetarischen Lebensmitteln unter kontrollierter kohlendioxid (CO₂)- reicher Atmosphäre ist im Großhandel bekannt und findet weitverbreitet Anwendung. Es bestand aber ein Bedarf, insbesondere im Einzelhandel, beispielsweise auf Obst- und Gemüsemärkten, an Vorrichtungen, die es ermöglichen, in einfacher, rationeller Weise Lebensmittel, insbesondere Obst, Gemüse und Salate, länger frisch zu halten, das heißt, ihre Haltbarkeit hinsichtlich Aussehen, wie Farbe, Oberflächenbeschaffenheit u.s.w., Festigkeit und Gefühl beim Anfassen, Geschmack und Aroma, zu verbessern.

Die Aufgabe, die sich dem Erfinder stellte, war also die, eine Vorrichtung bereitzustellen, die es ermöglicht, Früchte, wie tropischen Früchte oder Zitrusfrüchte, und allgemein Obst, Gemüse, Salate und andere überwiegend vegetarische Lebensmittel, weiterhin Zier-, Duft-, Heilpflanzen, Kräuter, Schnittblumen, Tees u.s.w. in verhältnismäßig einfacher und kostengünstiger Weise mit einem geeigneten Gas, z. B. Kohlendioxid oder einem kohlendioxidhaltigen Gasgemisch, zum Zwecke der Frischhaltung zu behandeln. Die Vorrichtung sollte einfach zu handhaben und in einer bevorzugten Ausführungsform zudem ohne besonderen Aufwand transportabel sein.

Dieses Problem wird mit den in den Patentansprüchen aufgeführten Merkmalen gelöst. Gegenstand der Erfindung ist gemäß Patentanspruch 1 ein Gas-Behandlungssatz zum Behandeln von Lebensmitteln und/oder Pflanzen mittels konservierender Gase oder Gasgemische, insbesondere mittels Kohlendioxid (CO₂), umfassend einen gasdicht abschließbaren Rezipienten, der gegebenenfalls eine Abdeckung aufweist, und eine Gasquelle, welcher Gas-Behandlungssatz dadurch gekennzeichnet ist, daß in dem Rezipienten mindestens eine Gaseinlaßvorrichtung, vorzugsweise ein Einwegventil, und mindestens ein Gasauslaßventil vorgesehen sind.

Ein weiterer Gegenstand der Erfindung ist die Verwendung des neuen Gas-Behandlungssatzes zum Frischhalten von Lebensmitteln und/oder Pflanzen, insbesondere von Pflanzenteilen, wie Schnittblumen, wobei man imittels des Gasauslaßventils im Rezipienten einen Überdruck von bis zu 1 bar, vorzugsweise bis zu 0.5 bar, aufrechterhält.

Die in der Beschreibung und in den Patentansprüchen angegebenen Bezugsziffern beziehen sich auf die Zeichnungen, in denen bevorzugte erfindungsgemäße Gas-Behandlungssätze sowie Elemente solcher erfindungsgemäßen Gas-Behandlungssätze dargestellt sind.

Das Einwegventil (1) und/oder das Auslaßventil (11) oder mindestens eines der Ventile (1) bezw. (11) sind beispielsweise in die Seitenwand (2) bezw. die Seitenwände des Rezipienten (Behälters) eingebaut.

Andererseits können das Einwegventil (1) und/oder das Auslaßventil (11) oder mindestens eines der Ventile (1) bezw. (11) auch in der Abdeckung des Rezipienten (Behälters) vorgesehen sein.

Gemäß einer bevorzugten Ausführungsform der Erfindung ist der Rezipient (Behälter) eine beispielsweise runde (3) oder eckige (4), z. B. quaderförmige oder kubische, Kunststoffschüssel, und die gasdicht schließende Abdeckung ist ein gasdicht schließender Kunststoffdeckel (8) bezw. (9).

Gemäß einer weiteren bevorzugten Ausführungsform der Erfindung ist der Rezipient des Gas-Behandlungssatzes eine Obst-, Gemüse- und/oder Blumentheke (5), in deren Seitenwand (2) vorzugsweise ein Einwegventil (1) und ein Auslaßventil (11) eingebaut sind, und die Abdeckung ist ein Truhendeckel (6).

Die Erfindung umfaßt auch solche Gas-Behandlungssätze mit den beanspruchten Merkmalen, die in einen Kühlschrank (7) oder eine Kühltruhe eingebaut sind oder für einen solchen Einbau vorgesehen sind, um die Behandlung des Gutes bei erniedrigten Temperaturen durchführen zu können, was den gewünschten Frischhalteeffekt, der schon durch die Gasbehandlung allein erzielt wird, noch verstärkt.

Als Gasquelle kann eine handelsübliche Kohlendioxidvorratsflasche mit einem Fasungsvermögen von beispielsweise 2 kg dienen. Es sind aber - vor allem bei größeren Anlagen - möglicherweise Gasleitungssysteme, die von externen Gasquellen gespeist werden, den handelsüblichen Kohlendioxidvorratsflaschen vorzuziehen. Dem Fachmann ist es ohne weiteres an Hand gegeben, die für den jeweiligen Fall geeignetste Gaszuführung - und gegebenenfalls Gasabzugsvorrichtung - auszuwählen.

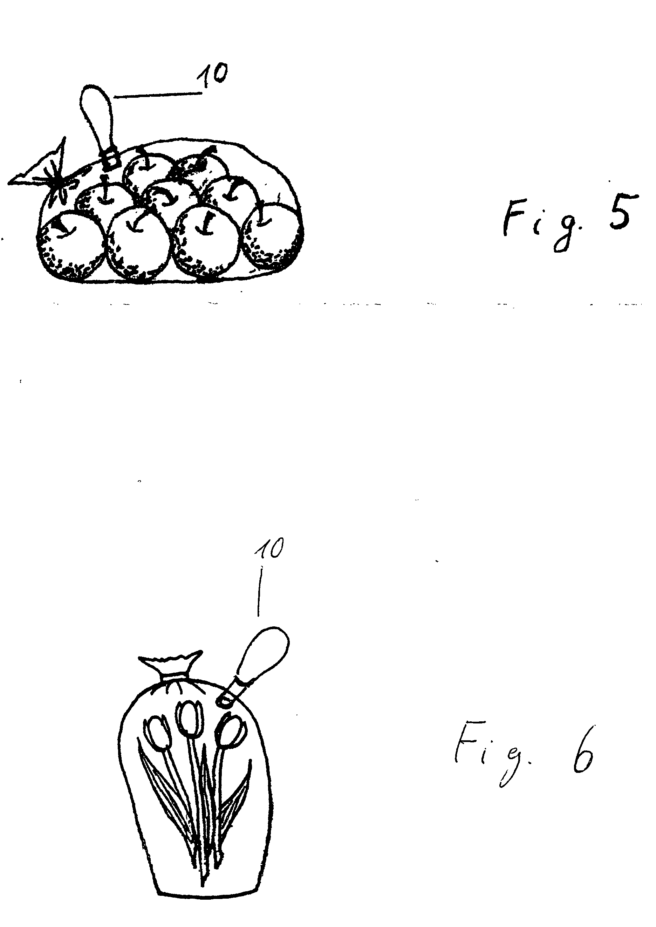

Eine weitere Kohlendioxidquelle, die vor allem für Rezipienten mit relativ kleinen Volumina, wie beispielsweise runde (3) oder viereckige (4), z. B. quaderförmige oder kubische, Kunststoffschüsseln und für Beutel (Figuren 5 und 6) in Betracht kommt, ist eine im Handel erhältliche, beispielsweise zur Herstellung von Schlagsahne empfohlene Kohlendioxidgas-Kartusche (10). Solche Gaskartuschen (10) sind für einen einmaligen Gebrauch bestimmt. Sie werden mittels einer Schraubmuffe oder Überwurfmutter auf ein Einwegventil (1) fest aufgesetzt. Sie öffnen sich beim Festschrauben der Muffe bezw. Mutter und geben ihren unter Überdruck stehenden Gasinhalt dann durch das Einwegventil (1) in das Innere des Rezipienten ab.

Die Behändlungstempertur kann die Umgebungstemperatur sein; erhöhte oder erniedrigte Temperaturen im Bereich von z. B. 1 bis 10 Grad C. sind je nach dem zu behandelnden Gut ebenfalls anwendbar.

Der erfindungsgemäße Gas-Behandlungssatz kann auf verschiedenen Gebieten verwendet werden. Dazu gehören die Lagerung und der Transport von Früchten, Obst, Gemüse, Salaten und anderen überwiegend vegetarischen Stoffen, insbesondere von Lebensmitteln oder Blumen.

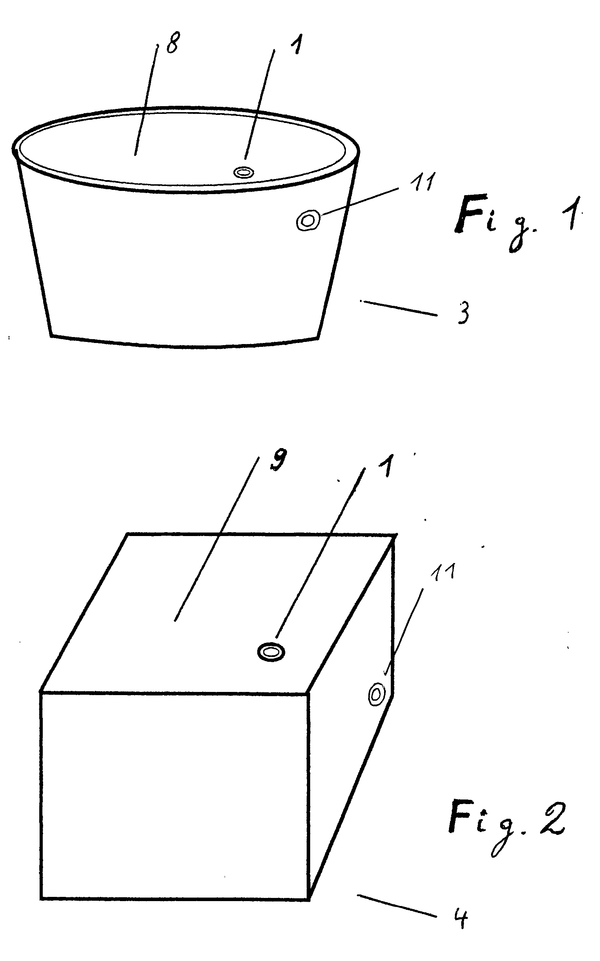

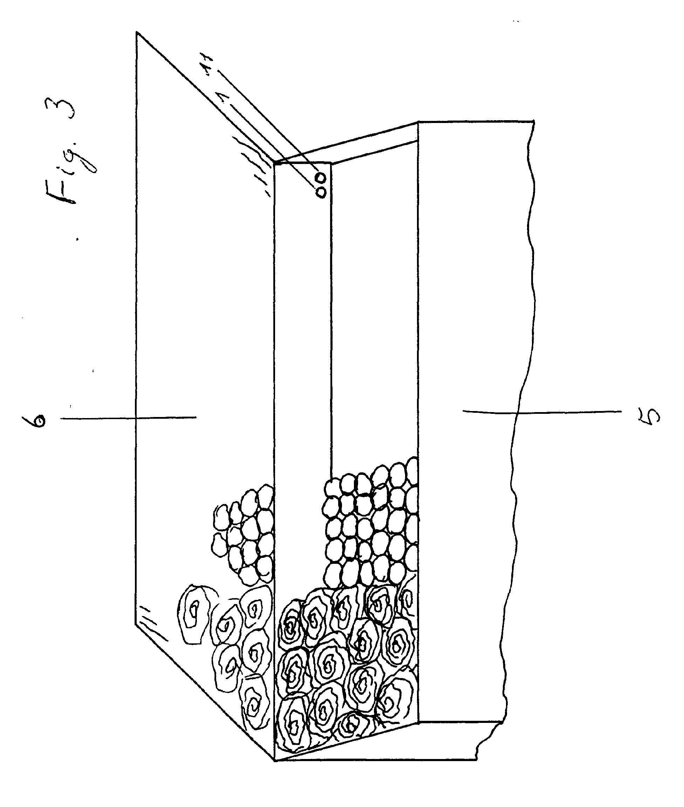

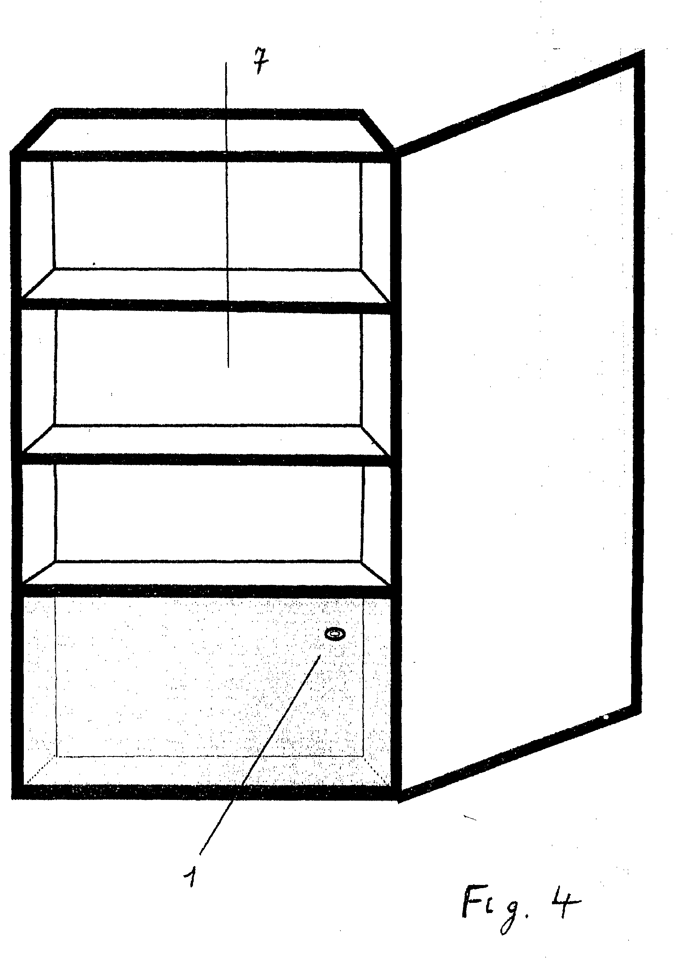

Ausführungsbeispiele der Erfindung werden anhand der Zeichnungen (Figuren 1 bis 6) erläutert. Es zeigen:
Fig. 1 eine runde Kunststoffschüssel (3) und Fig. 2 eine quaderförmige Kunststoffschüssel (4) mit gasdicht abschließendem, rundem Deckel (8) bezw. eckigem Deckel (9), in welchem Deckel jeweils ein Ventil (1) zum Einleiten von Kohlendioxid angebracht ist,
Fig. 3 eine Obst- und/oder Gemüsetheke (5) mit einem Truhendeckel (6), in deren Seitenwand ein Ventil (1) sowie ein Auslaßventil (11) eingesetzt sind,
Fig. 4 einen Kühlschrank (7), in dessen Bodenabschnitt ein erfindungsgemäßer Gas-Behandlungssatz eingebaut ist,
Fig. 5 und Fig. 6 jeweils einen Plastikbeutel, in den ein Einwegventil fest eingeschweißt worden ist, auf das eine Gaskartusche (10) aufgeschraubt worden ist. Die Plastikbeutel sind gasdicht zugebunden und beim Zuschnüren wird in den Zipfel des Beutels ein Auslaßventil (11) (in der Zeichnung nicht dargestellt) fest eingebunden. Die Beutel umschließen im ersten Falle ein frisch zu haltendes Gut, z. B. Äpfel (Fig. 5), und im zweiten Falle ein frisch zu haltendes Blumenbukett (Fig. 6).

### Legende

- 1 =: Einwegventil
- 2 =: Seitenwand
- 3 =: runde Kunststoffschüssel
- 4 =: eckige Kunststoffschüssel
- 5 =: Theke
- 6 =: Truhendeckel
- 7 =: Kühlschrank
- 8 =: runder Kunststoffdeckel
- 9 =: eckiger Kunststoffdeckel
- 10 =: Gaskartusche
- 11 =: Auslaßventil

## Patentansprüche

1. Gas-Behandlungssatz zum Behandeln von Lebensmitteln und/oder Pflanzen mittels konservierender Gase oder Gasgemische, insbesondere mittels Kohlendioxid (CO₂), umfassend einen gasdicht abschließbaren Rezipienten, der gegebenenfalls eine Abdeckung aufweist, und eine Gasquelle, welcher Gas-Behandlungssatz **dadurch gekennzeichnet ist, daß** in dem Rezipienten mindestens eine Gaseinlaßvorrichtung und mindestens ein Gasauslaßventil vorgesehen sind.

2. Gas-Behandlungssatz nach Anspruch 1, **dadurch gekennzeichnet, daß** die Gaseinlaßvorrichtung ein Einwegventil ist.

3. Gas-Behandlungssatz nach Anspruch 2, **dadurch gekennzeichnet, daß** das Einwegventil (1) oder mindestens eines der Ventile (1) in der Seitenwand (2) bezw. den Seitenwänden des Rezipienten vorgesehen sind.

4. Gas-Behandlungssatz nach Anspruch 2 oder 3, **dadurch gekennzeichnet, daß** das Einwegventil (1) oder mindestens eines der Ventile (1) in der Abdeckung des Rezipienten vorgesehen sind.

5. Gas-Behandlungssatz nach einem der Ansprüche 1 bis 4, **dadurch gekennzeichnet, daß** der Rezipient eine Kunststoffschüssel (3) bezw. (4) ist und einen gasdicht schließenden Kunststoffdeckel (8) bezw. (9) aufweist.

6. Gas-Behandlungssatz nach einem der Ansprüche 1 bis 5, **dadurch gekennzeichnet, daß** er in einem Kühlschrank (7) oder einer Kühltruhe eingebaut ist.

7. Gas-Behandlungssatz nach einem der Ansprüche 1 bis 3, **dadurch gekennzeichnet, daß** der Behälter eine Obst-, Gemüse- und/oder Blumentheke (5) und die Abdeckung ein Truhendeckel (6) ist.

8. Gas-Behandlungssatz nach einem der Ansprüche 1 bis 7, **dadurch gekennzeichnet, daß** die Kohlendioxidquelle eine Kohlendioxidvorratsflasche, ein Gasleitungssystem oder eine Gaskartusche ist.

9. Gas-Behandlungssatz nach Anspruch 1 oder 2, **dadurch gekennzeichnet, daß** der Rezipient ein Plastikbeutel (10) ist, in den ein Einwegventil eingesetzt ist.

10. Verwendung des Gas-Behandlungssatzes nach einem der Ansprüche 1 bis 9 zum Frischhalten von Lebensmitteln und/oder Pflanzen, insbesondere von Pflanzenteilen wie Schnittblumen, wobei man mittels des Gasauslaßventils im Rezipienten einen Überdruck von bis zu 1 bar, vorzugsweise bis zu 0,5 bar aufrechterhält.
